# EUROPÄISCHE PATENTANMELDUNG

(11) **EP 4 696 551 A1**
(43) Veröffentlichungstag der Anmeldung: **18.02.2026**
(21) Anmeldenummer: 25180949.7
(22) Anmeldetag: 05.06.2025
(51) Int. Cl.: B60N 2/015, B60N 2/24, B61D 33/00

(54) **SITZANORDNUNG**

(30) Priorität: 12.08.2024 DE 102024207662
(71) Anmelder: Siemens Mobility GmbH, 80997 München (DE)
(72) Erfinder: Wanczura, Stefan, 45665 Recklinghausen (DE)
(74) Vertreter: Siemens Patent Attorneys

(57) **Zusammenfassung**

Die Erfindung betrifft eine Sitzanordnung 10, insbesondere für ein Fahrzeug des Personentransports 1, umfassend zumindest einen Sitz 200 und eine Tragarmanordnung 100, wobei die Tragarmanordnung 100 einen Tragarm 120 aufweist, wobei der Tragarm 120 ein Tragarmelement 130 und ein Stützelement 140 aufweist. Das Stützelement 140 ist integral in das Tragarmelement 130 eingebunden und der Tragarm 120 ist einstückig ausgebildet.

## Beschreibung

Die Erfindung betrifft eine Sitzanordnung, insbesondere für ein Fahrzeug des Personentransports, umfassend zumindest einen Sitz und eine Tragarmanordnung, wobei die Tragarmanordnung einen Tragarm aufweist, und wobei der Tragarm ein Tragarmelement und ein Stützelement aufweist,

Ferner betrifft die Erfindung ein Fahrzeug des Personentransports, umfassend zumindest eine solche oder wie nachfolgend beschrieben, weitergebildete Sitzanordnung.

Solche Sitzanordnungen kommen üblicherweise bei Commuterbahnen, Regionalbahnen oder S-Bahnen, zum Einsatz und sind speziell an die Bedürfnisse solcher Bahnen angepasst.

Die jetzigen Sitzträger sind aus einer geschweißten Trägerstruktur aus mehreren gekanteten Blechprofilen hergestellt. Die obere Befestigung erfolgt seitenwandnah über Gummielemente + weitere Profile, welche über Nutensteine mit der C-Schiene der Seitenwand verschraubt werden. Bauartbedingt ist der seitenwandnahe Montagebereich eingeschränkt. Zudem sind die Befestigungsschrauben im Fahrzeug nur knieend erreichbar, da diese unterhalb der Sitze angeordnet sind. Die untere Befestigung erfolgt über eine einstellbare Druckstange, welche die Winkeleinstellbarkeit der Sitzträgerstruktur, im Fahrzeug ermöglicht. Auch diese Befestigungselemente sind schlecht erreichbar. Durch die offene geschweißte Rahmenstruktur besteht zudem Verletzungsgefahr an scharfen Bauteilkanten. Eine gefällige "Designanmutung" ist nur durchzusätzliche Verkleidungselemente zu erreichen. Durch die bisher übliche Stahlbauweise ergeben sich zudem hohe Bauteilgewichte.

Das Dokument EP 3 676 150 B1 betrifft eine gattungsgemäße Sitzanordnung. Diese ist modular aufgebaut, weist jedoch aufgrund der verwendeten Konstruktion ein verhältnismäßig hohes Gewicht auf.

Die bekannten Sitzanordnungen sind häufig schwer, benötigen eine zusätzliche Abstützung zur Seitenwand. Bei bisherigen Neufahrzeugen sind fast immer Anpassungen an der Sitzanbindungsstruktur erforderlich oder der Rohbau musste sich an der betreffenden, vorliegenden Anbindungsstruktur orientieren.

Ausgehend davon liegt der Erfindung die Aufgabe zugrunde eine Sitzanordnung bereitzustellen, die ein geringeres Gewicht und einen einfacheren Aufbau aufweist.

Diese Aufgabe wird durch die Sitzanordnung des Anspruchs 1 und das Fahrzeug des Anspruchs 15 gelöst.

Vorteilhafte Ausgestaltungen und Weiterbildungen sind Gegenstand der jeweiligen Unteransprüche.

Erfindungsgemäß wird eine Sitzanordnung, insbesondere für ein Fahrzeug des Personentransports bereitgestellt, umfassend zumindest einen Sitz und eine Tragarmanordnung, wobei die Tragarmanordnung einen Tragarm aufweist, und wobei der Tragarm ein Tragarmelement und ein Stützelement aufweist. Das Stützelement ist integral in das Tragarmelement eingebunden ist und der Tragarm einstückig ausgebildet ist.

Erfindungsgemäß wird ferner ein Fahrzeug des Personentransports bereitgestellt, umfassend einen Wagenkasten mit einer Wand, vorzugsweise Seitenwand, und zumindest eine solche oder wie nachfolgend beschrieben weitergebildete Sitzanordnung, wobei die Sitzanordnung an der Wand befestigt ist.

Bei dem Fahrzeug des Personentransports handelt es sich vorzugsweise um ein spurgeführtes Fahrzeug, ferner vorzugsweise Schienenfahrzeug.

Zum Personentransport geeignete Fahrzeuge sind spezifisch an den Personentransport angepasst.

Bei der Sitzanordnung handelt es sich insbesondere um eine Sitzanordnung für ein Fahrzeug des Personentransports.

Bei der Wand handelt es sich vorzugsweise um eine Seitenwand.

Durch die erfindungsgemäße Sitzanordnung wird eine Sitzanordnung geschaffen, die montagefreundlich ausgebildet ist, die notwendigen Bauräume der an den Seitenwänden längslaufenden Klimakanäle berücksichtigt und den Designvorgaben entspricht, und einen unteren Befestigungspunkt spannungs-/spielfrei montieren lässt.

Die einstückige Ausbildung des Tragarms durch die Integration des Stützelements in das Tragarmelements bedeutet, dass Stützelements und Tragarmelement als ein einzelnes vorgefertigte Bauteil - als Tragarm - ausgebildet sind. Dabei sind das Stützelement und Tragarmelement stoffschlüssig miteinander verbunden.

Durch die erfindungsgemäße Sitzanordnung wird eine flexible, leicht an unterschiedliche Fahrzeugtypen anpassbare Sitzanordnung bereitgestellt, die sich aus gleichbleibenden Komponenten ausbilden lässt. Die erfindungsgemäße Sitzanordnung kann für Einzel, Doppel- oder Vierersitze verwendet werden. Die erfindungsgemäße Sitzanordnung ist leichter und kostengünstiger ausgebildet als bekannte Sitzanordnungen.

Ferner wird durch die erfindungsgemäße Sitzanordnung ein verbessertes Design und ein verbesserter Toleranzausgleich bereitgestellt.

In Ausgestaltung ist die Sitzanordnung als Cantilever-Anordnung ausgebildet.

In Ausgestaltung der Sitzanordnung kann vorgesehen sein, dass die Tragarmanordnung zumindest eine erste Wandhalterung aufweist, welche an dem Tragarmelement angebunden ist und zumindest eine zweite Wandhalterung aufweist, welche an dem Stützelement angebunden ist.

Hierdurch wird erreicht, dass an dem Tragarm, der einstückig ausgebildet ist unmittelbar an der Tragarmanordnung die zumindest eine erste Wandhalterung angeordnet ist und unmittelbar an dem Stützelement die zumindest eine zweite Wandhalterung angeordnet ist. Hierdurch wird die Montage erleichtert.

In Ausgestaltung der Sitzanordnung kann vorgesehen sein, dass das Tragarmelement ein erstes Ende aufweist, wobei an dem ersten Ende die zumindest eine erste Wandhalterung angebunden ist.

Durch die Bereitstellung der zumindest einen ersten Wandhalterung am ersten Ende des Tragarmelements wird die zumindest eine erste Wandhalterung unmittelbar mit dem Tragarmelement verbunden, sodass auf weitere zwischen Bauteile verzichtet werden kann. Dies führt zu einem einfachen und leichten Aufbau.

In Ausgestaltung der Sitzanordnung kann vorgesehen sein, dass das Tragarmelement ein zweites Ende aufweist, das dem ersten Ende gegenüberliegt und als freies Ende ausgebildet ist.

Hierdurch wird ein freies Ende definiert, das frei von Wandhalterungen ist.

In Ausgestaltung der Sitzanordnung kann vorgesehen sein, dass die zumindest eine erste Wandhalterung ein erstes Anbindungselement zur Anbindung der ersten Wandhalterung an einer Wand aufweist und ein erstes Lagerelement zur Anbindung der ersten Wandhalterung an dem Tragarmelement aufweist.

Das erste Anbindungselement und das erste Lagerelement sind dabei miteinander verbunden und bilden eine lösbare Verbindung aus.

Hierdurch wird eine Verbindung angegeben, welche durch aus einer geringen Anzahl an Elementen ausgebildet ist.

In Ausgestaltung der Sitzanordnung kann vorgesehen sein, dass die zumindest eine zweite Wandhalterung ein zweites Anbindungselement zur Anbindung der zweiten Wandhalterung an einer Wand aufweist und ein zweites Lagerelement zur Anbindung der zweiten Wandhalterung an dem Stützelement aufweist.

Das zweite Anbindungselement und das zweite Lagerelement sind dabei miteinander verbunden und bilden eine lösbare Verbindung aus.

Hierdurch wird eine Verbindung angegeben, welche durch aus einer geringen Anzahl an Elementen ausgebildet ist.

In Ausgestaltung der Sitzanordnung kann vorgesehen sein, dass die zumindest eine erste Wandhalterung und/oder die zumindest eine zweite Wandhalterung jeweils eine Kugelkalottenverbindung aufweist.

Die Kugelkalottenverbindung wird dabei vorzugsweise durch eine Kugelpfanne und eine Kugel ausgebildet, welche ferner vorzugsweise über einen. Bolzen miteinander verbunden sind.

Die Kugelkalottenverbindung bewirkt, dass bei relativen Winkeländerungen zwischen der zumindest einen ersten Wandhalterung und/oder der zumindest einen zweiten Wandhalterung Bauteilverspannungen verhindert werden, da diese während der Montage durch die noch nicht festgesetzten Kugelkalottenverbindung ausgeglichen werden können.

Hierdurch wird erreicht, dass die zumindest eine erste Wandhalterung und/oder die zumindest eine zweite Wandhalterung jeweils eine einstellbare Verbindung aufweisen, welche zudem einen zentralen Drehpunkt für die jeweilige zumindest eine erste Wandhalterung und/oder die zumindest eine zweite Wandhalterung bereitstellt.

Hierdurch wird erreicht, dass eine Einstellbarkeit der Sitzanordnung auch im bereits vor montierten Zustand möglich ist und somit eine Justage vor dem endgültigen Festsetzen der Kugelkalottenverbindung möglich ist. Hierdurch können Toleranzen ausgeglichen.

In Ausgestaltung der Sitzanordnung kann vorgesehen sein, dass die zumindest eine erste Wandhalterung und/oder die zumindest eine zweite Wandhalterung jeweils einen einzelnen zentralen Bolzen aufweist, welcher zur Erzeugung einer Vorspannung ausgebildet ist und vorzugsweise mit der jeweiligen Kugelkalottenverbindung zusammenwirkt.

Der zumindest eine einzelne zentrale Bolzen verbindet dabei jeweils das erste Anbindungselement mit dem ersten Lagerelement der jeweiligen ersten Wandhalterung und/oder jeweils das zweite Anbindungselement mit dem zweiten Lagerelement der jeweiligen zweiten Wandhalterung.

Durch Montage / Demontage des zumindest einen einzelnen zentralen Bolzens ist die jeweilige erste Wandhalterung und/oder zweite Wandhalterung montierbar / demontierbar.

Ferner ist durch den zumindest einen einzelnen zentralen Bolzens eine Höheneinstellung der Sitzanordnung zum Ausgleich von Fertigungstoleranzen des Rohbaus möglich.

In Ausgestaltung der Sitzanordnung kann vorgesehen sein, dass die Tragarmanordnung zumindest eine Sitzträgerplatte aufweist, die mit dem Tragarm verbunden ist und wobei die Sitzträgerplatte den Sitz trägt.

Hierdurch wird erreicht, dass eine Sitzträgerplatte bereitgestellt wird, welche speziell an den zu montierenden Sitz angepasst ist. Der Tragarm muss demnach nicht speziell an den Sitz angepasst werden, sondern dies geschieht über die Integration der Sitzträgerplatte in die Tragarmanordnung.

In Ausgestaltung der Sitzanordnung kann vorgesehen sein, dass der Tragarm als Verbundbauteil, vorzugsweise als Faserverbundbauteil ausgebildet ist. Dies erlaubt ein geringes Gewicht der Sitzanordnung.

Vorzugsweise ist die Sitzanordnung in Leichtbauweise ausgeführt. Hierdurch wird das Bauteilgewicht niedrig gehalten.

In Ausgestaltung der Sitzanordnung kann vorgesehen sein, dass der Tragarm bspw. durch ein RTM-Verfahren (Resin Transfer Moulding) hergestellt ist.

In Ausgestaltung der Sitzanordnung kann demnach vorgesehen sein, dass der Tragarm derart ausgebildet ist, dass Metallstrukturen und Fasern durch ein Matrixmaterial miteinander verbunden sind.

Die Faserart und die Faserorientierung kann dabei nach Höhe der Belastung und Belastungsrichtung ausgelegt werden.

In Ausgestaltung der Sitzanordnung kann vorgesehen sein, dass das Stützelement zumindest zwei Stützstreben aufweist, welche sich von einer, vorzugsweise einer einzelnen, Stützanbindung zum Tragarmelement erstrecken.

In Ausgestaltung der Sitzanordnung kann vorgesehen sein, dass der Tragarm einen zwischen dem Tragarmelement und dem Stützelement definierten Freiraum aufweist, welcher frei von Elementen der Sitzanordnung ist.

Hierdurch wird durch die Sitzanordnung unabhängig von der Fahrzeugkontur bereits ein Freiraum definiert, der frei von Elementen der Sitzanordnung ist und verhindert, dass es bei der Montage der Sitzanordnung bzw. der Tragarmanordnung zu Kollisionen kommt.

Des Weiteren kann vorgesehen sein, dass der Freiraum Teil eines Bauraums des Fahrzeugs ist, in welchem längs zur Wand verlaufende Bauteile aufgenommen werden können.

In Ausgestaltung der Sitzanordnung kann vorgesehen sein, dass die Tragarmanordnung, vorzugsweise die Sitzträgerplatte und/oder das Tragarmelement, in einer Querrichtung betrachtet, zumindest im Bereich des ersten Endes durch einen mittleren offenen Profilbereich oder ein mittleres offenes Profil ausgebildet ist, der seitlich von zwei geschlossenen Profilbereichen oder zwei geschlossenen Profilen eingefasst ist.

Vorzugsweise erfolgt die Aussteifung des offenen Profilbereichs / Profils dabei durch T-Profile, welche die notwendige Biegesteifigkeit sicherstellen.

Um die Biegesteifigkeit der Tragarmanordnung weiter zu erhöhen, können zwischen den T-Profilen als Verstärkungsbänder z.B. "rechteckige Kohlefasergurte" eingeklebt werden, welche die Biegesteifigkeit der der Tragarmanordnung signifikant steigern, ohne das Gesamtgewicht wesentlich zu erhöhen. Im Umkehrschluss heißt das, man kann das Gesamtgewicht bei gleicher Bauteilsteifigkeit signifikant senken.

Insbesondere können die beiden äußeren Profile/Profilbereiche dabei als Hohlkammerprofil ausgebildet sein.

Die äußeren geschlossenen Profile/ die zwei geschlossenen Profilbereiche weisen vorzugsweise auf der Oberseite eine integrierte Schiene, vorzugsweise eine C-Schiene, für eine Befestigung des zumindest einen Sitzes auf.

In Ausgestaltung der Sitzanordnung kann vorgesehen sein, dass der Tragarmanordnung, vorzugsweise das Tragarmelement und/oder die die Sitzträgerplatte, an seiner Unterseite durch Verstärkungsbänder, vorzugsweise aus einem Faserverbundwerkstoff, ferner vorzugsweise aus einem Kohlenfaserverbundwerkstoff, verstärkt ist, wobei die Verstärkungsbänder vorzugsweise bereichsweise ausgebildet sind.

Hierdurch kann die Biegesteifigkeit der Tragarmanordnung als Gesamtverbund signifikant gesteigert werden, ohne das Gesamtgewicht wesentlich zu erhöhen. Im Umkehrschluss heißt das, man kann das Gesamtgewicht bei gleicher Bauteilsteifigkeit signifikant senken, was als Auslegungskriterium zu berücksichtigen ist.

Es kann ferner vorgesehen sein, dass zur Aussteifung der der Tragarmanordnung T-Profile ausgebildet sind, welche die Biegesteifigkeit der Tragarmanordnung erhöhen.

Um die Biegesteifigkeit der Tragarmanordnung weiter zu erhöhen, können zwischen und an den T-Profilen als Verstärkungsbänder z.B. "rechteckige Kohlefasergurte" eingeklebt werden.

In Ausgestaltung des Fahrzeugs kann vorgesehen sein, dass die Wand Befestigungsschienen aufweist zur Befestigung der Sitzanordnung an der Wand.

Vorzugsweise sind die Befestigungsschienen als C-Schienen ausgebildet und in die Wand des Fahrzeugs integriert.

Die Sitzanordnung ist über die zumindest eine erste Wandhalterung und die zumindest eine zweite Wandhalterung an die Befestigungsschienen angebunden. Hierzu greifen das zumindest eine ersten Anbindungselement und das zumindest eine zweite Anbindungselement in die Befestigungsschienen ein.

Da die Verbindung nicht nur über Reibschluss und damit direkt von der Vorspannkraft der zentralen Bolzen und dem Reibwert der Verbindungsflächen (z.T. stark schwankend) abhängt, sondern vielmehr über Formschluss (Kugelkalottenverbindung) und Anbindungselementen mit der Wand verbunden ist, werden auch außergewöhnliche Lastfälle (z.B. Frontalcrash) sicher ohne "Rutschen" aufgenommen.

Das Vorsehen von Befestigungsschienen erlaubt es eine einfache und verschiebbare Montage zu erreichen und eine geringe Anzahl an Bauteilen bei gleichzeitiger Integration der Befestigungsschiene in die Seitenwand zu erreichen.

In Ausgestaltung des Fahrzeugs kann vorgesehen sein, dass zwischen der Wand, dem Tragarmelement und dem Stützelement ein Bauraum ausgebildet ist, der den Freiraum umfasst, wobei der Bauraum, längs zur Wand zur Wand verlaufende Bauteile, insbesondere eines oder mehrere Bauteile aus der folgenden Gruppe aufnimmt: Leitungen, Kabel, Luftkanäle, Verkleidungen, Elektronikbaugruppen, Isolierungen, Aggregate, Hydraulikbaugruppen, Pneumatikbaugruppen, Baugruppen von Klimasystemen, Heizelemente.

Durch die Bereitstellung des Bauraums können längs zur Wand verlaufende Bauteile bereits vor der Montage der Sitzanordnung montiert sein und es kommt nicht zu Kollisionen bei der Montage der Sitzanordnung. Des Weiteren wird verhindert, dass solche längs zur Wand verlaufende Bauteile für die Montage der Sitzanordnung demontiert werden müssen.

Bei dem spurgeführten Fahrzeug handelt es sich beispielsweise um ein Schienenfahrzeug oder eine Magnetschwebebahn, vorzugsweise zum Personentransport.

Vorzugsweise handelt es sich bei dem Schienenfahrzeug um eine Commuterbahn, eine Regionalbahn oder eine S-Bahn.

Nachfolgend soll die Erfindung anhand einer Ausführungsformen mit Bezug auf die Zeichnungen erläutert werden.

Es zeigt:
- Fig. 1: eine schematische Schnittdarstellung eines Fahrzeugs des Personentransports mit einer erfindungsgemäßen Sitzanordnung;
- Fig. 2: eine schematische Längsschnittdarstellung der erfindungsgemäßen Sitzanordnung;
- Fig. 3: eine schematische Querschnittdarstellung der erfindungsgemäßen Sitzanordnung;
- Fig. 4: eine schematische Schnittdarstellung des Fahrzeugs des Personentransports mit der erfindungsgemäßen Sitzanordnung im Bereich einer ersten Wandanbindung der Sitzanordnung;
- Fig. 5: eine schematische Schnittdarstellung des Fahrzeugs des Personentransports mit der erfindungsgemäßen Sitzanordnung im Bereich einer zweiten Wandanbindung der Sitzanordnung; und
- Fig. 6: eine schematische Darstellung der erfindungsgemäßen Sitzanordnung im Bereich einer zweiten Wandanbindung.

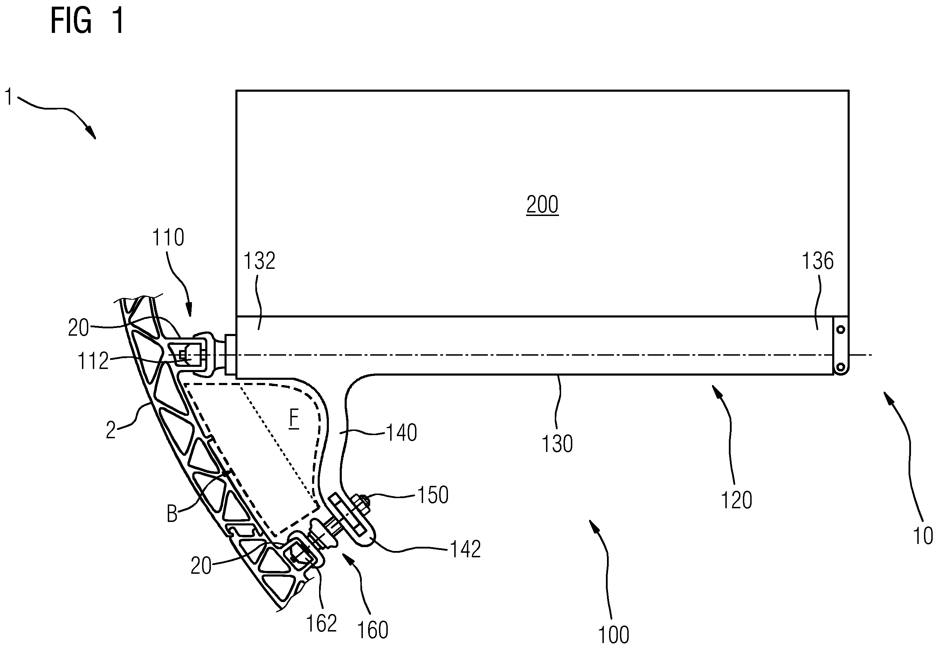

Fig. 1 zeigt eine schematische perspektivische Darstellung eines Fahrzeugs des Personentransports 1 mit einer erfindungsgemäßen Sitzanordnung 10.

Das Fahrzeug des Personentransports 1 ist insbesondere ein spurgeführtes Fahrzeug, vorzugsweise ein Schienenfahrzeug.

Das Fahrzeug des Personentransports 1 umfasst einen Wagenkasten mit einer Wand 2. Bei der Wand 2 handelt es sich vorzugsweise um eine Seitenwand.

Das Fahrzeug des Personentransports 1 umfasst zumindest eine Sitzanordnung 10, wobei die Sitzanordnung 10 an der Wand 2 befestigt ist. Die Wand 2 weist Befestigungsschienen 20 auf zur Befestigung der Sitzanordnung an der Wand 2.

Vorzugsweise sind die Befestigungsschienen 20 als C-Schienen ausgebildet und in die Wand 2 des Fahrzeugs des Personentransports 1 integriert.

Bei der Sitzanordnung 10 handelt es sich insbesondere um eine Sitzanordnung 10 für ein Fahrzeug des Personentransports 1.

Die Sitzanordnung umfasst zumindest einen Sitz 200 und eine Tragarmanordnung 100.

Die Tragarmanordnung 100 weist einen Tragarm 120 auf. Der Tragarm 120 weist ein Tragarmelement 130 und ein Stützelement 140 auf.

Das Stützelement 140 ist integral in das Tragarmelement 130 eingebunden und der Tragarm 120 ist einstückig ausgebildet.

Die Tragarmanordnung 100 weist zumindest eine erste Wandhalterung 110 auf, welche an dem Tragarmelement 130 angebunden ist und zumindest eine zweite Wandhalterung 160 auf, welche an dem Stützelement 140 angebunden ist.

Das Tragarmelement 130 weist ein erstes Ende 132 auf, wobei an dem ersten Ende 132 die zumindest eine erste Wandhalterung 110 angebunden ist.

Das Tragarmelement 130 weist ein zweites Ende 136 auf, das dem ersten Ende 132 gegenüber liegt und als freies Ende ausgebildet ist. Hierdurch wird ein freies Ende definiert, das frei von Wandhalterungen ist.

Der Tragarm 120 weist einen zwischen dem Tragarmelement 130 und dem Stützelement 140 definierten Freiraum F auf, welcher frei von Elementen der Sitzanordnung 10 ist.

In Ausgestaltung des Fahrzeugs des Personentransports 1, ist zwischen der Wand 2, dem Tragarmelement 130 und dem Stützelement 140 ein Bauraum B ausgebildet, der den Freiraum F umfasst, wobei der Bauraum B, längs zur Wand 2 verlaufende Bauteile, insbesondere eines oder mehrere Bauteile aus der folgenden Gruppe, aufnimmt: Leitungen, Kabel, Luftkanäle, Verkleidungen, Elektronikbaugruppen, Isolierungen, Aggregate, Hydraulikbaugruppen, Pneumatikbaugruppen, Baugruppen von Klimasystemen, Heizelemente.

Durch die Bereitstellung des Bauraums B können längs zur Wand 2 verlaufende Bauteile bereits vor der Montage der Sitzanordnung 10 montiert sein und es kommt nicht zu Kollisionen bei der Montage der Sitzanordnung 10. Des Weiteren wird verhindert, dass solche längs zur Wand verlaufende Bauteile für die Montage der Sitzanordnung 10 demontiert werden müssen.

Die einstückige Ausbildung des Tragarms 120 durch die Integration des Stützelements 140 in das Tragarmelements 130 bedeutet, dass Stützelements 140 und Tragarmelement 130 als ein einzelnes vorgefertigte Bauteil - als Tragarm 120 - ausgebildet sind. Dabei sind das Stützelement 140 und Tragarmelement 130 stoffschlüssig miteinander verbunden.

In Ausgestaltung ist die Sitzanordnung 10 als Cantilever-Anordnung ausgebildet.

Die Sitzanordnung 10 ist über die zumindest eine erste Wandhalterung 110 und die zumindest eine zweite Wandhalterung 160 an die Befestigungsschienen 20 angebunden. Hierzu greifen das zumindest eine erste Anbindungselemente 112 und das zumindest eine zweite Anbindungselemente 112 in die Befestigungsschienen 20 ein.

Der Tragarm 120 ist vorzugsweise als Verbundbauteil, vorzugsweise als Faserverbundbauteil ausgebildet.

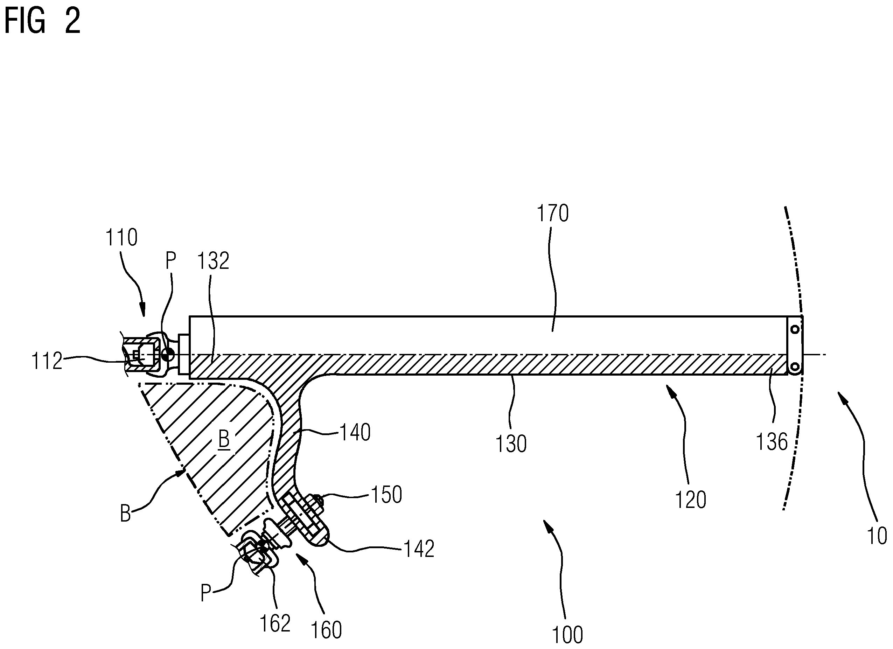

Fig. 2 zeigt eine schematische Längsschnittdarstellung der erfindungsgemäßen Sitzanordnung 10. Der Sitz 200 und die Elemente des Fahrzeugs des Personentransports 1, wie beispielsweise die Wand 2, sind gemäß Fig.2 nicht dargestellt.

Die Tragarmanordnung 100 weist zumindest eine Sitzträgerplatte 170 auf, die mit dem Tragarm 120 verbunden ist. Die Sitzträgerplatte 170 trägt den Sitz 200 (vgl. Fig. 1).

Die Montage der Sitzträgerplatte 170 an dem Tragarm 120 erfolgt wie folgt: Sind Sitzträgerplatte 170 und Tragarm 120 zueinander ausgerichtet, werden Befestigungsschrauben mit dem erforderlichen Anzugsdrehmoment angezogen.

Eine Montage erfolgt durch Bohrungen in der Sitzträgerplatte 170 von dem freien Ende 136 der Mittelgangseite aus. Dabei kommt bspw. ein Steckschlüssel mit entsprechender Verlängerung zum Einsatz.

Eine Verbindung zwischen der Sitzträgerplatte 170 (bspw. eine Schweißbaugruppe aus Aluminium-Profilen) und dem Tragarm 120 erfolgt hier über eine dem Kraftfluss (Biegemoment, Steifigkeit, Torsion...) angepasste und optimierte Bauteilgeometrie in Faserverbundbauweise des Tragarms 120 (GFK, CFK...). Die Tragarmanordnung 100 wirkt dabei mechanisch wie ein einseitig eingespannter Biegeträger. Die zumindest eine erste Wandhalterung 110 als obere Befestigungspunkte (Schrauben) erfährt dadurch im montieren Zustand eine Zugbelastung, die zumindest eine zweite Wandhalterung 160 als der untere Befestigungspunkt erfährt eine Druckbelastung.

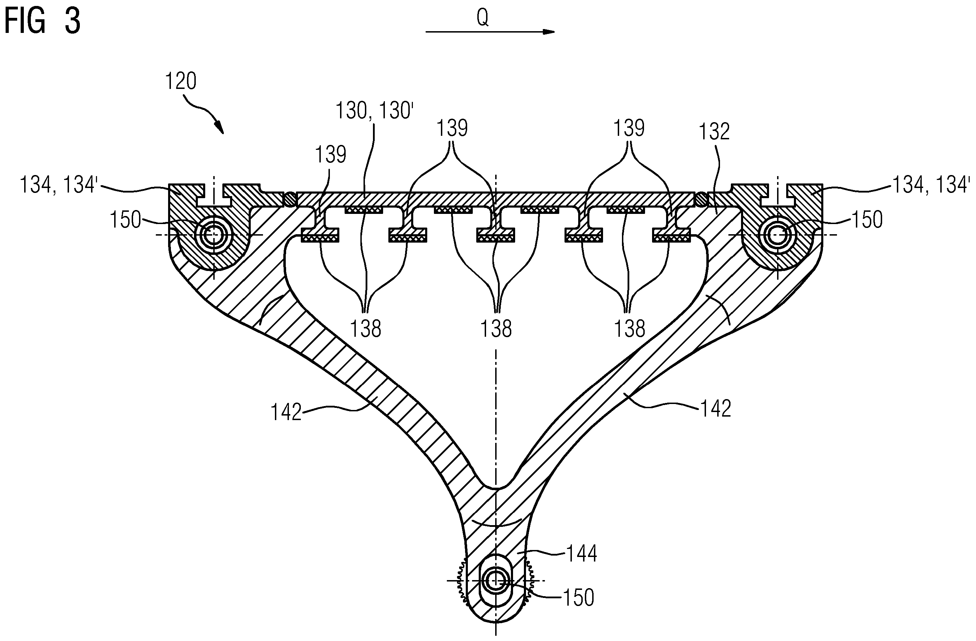

Fig. 3 zeigt eine schematische Querschnittdarstellung einer erfindungsgemäßen Sitzanordnung 10.

Wie aus der Fig. 3 ersichtlich, weist das Stützelement 140 zumindest zwei Stützstreben 142 auf, welche sich von einer, vorzugsweise einer einzelnen, Stützanbindung 144 zum Tragarmelement 130 erstrecken.

Gemäß Fig. 3 ist der Tragarmanordnung 100 in einer Querrichtung Q betrachtet im Bereich des ersten Endes 132 geschnitten dargestellt.

Die Tragarmanordnung 100, vorzugsweise die Sitzträgerplatte 170 und/oder das Tragarmelement 130, weist in der Querrichtung Q betrachtet zumindest im Bereich des ersten Endes 132 einen mittleren offenen Profilbereich 133 oder ein mittleres offenes Profil 133' auf, der/das seitlich von zwei geschlossenen Profilbereichen 134 oder zwei geschlossenen Profilen 134' eingefasst ist. Dabei können in Abhängigkeit von dem Werkstoff der Tragarmanordnung 100 sowohl mehrere Profile 133', 134' miteinander verbunden werden als auch ein einzelnes Profil mit unterschiedlichen Profilbereichen 133, 134 ausgebildet sein

Die Tragarmanordnung 100, vorzugsweise das Tragarmelement 130 und/oder die die Sitzträgerplatte 170, ist an seiner Unterseite durch Verstärkungsbänder 138, vorzugsweise aus einem Faserverbundwerkstoff, ferner vorzugsweise aus einem Kohlenfaserverbundwerkstoff, verstärkt.

Die Verstärkungsbänder 138 sind vorzugsweise bereichsweise ausgebildet.

Wie in der Fig. 3 ersichtlich erfolgt gemäß dem Ausführungsbeispiel die Aussteifung des offenen Profilbereichs / Profils der Tragarmanordnung 100 durch T-Profile 139, welche die Biegesteifigkeit der Tragarmanordnung 100 erhöhen.

Um die Biegesteifigkeit der Tragarmanordnung 100 weiter zu erhöhen, sind in Ausgestaltung zwischen den T-Profilen die Verstärkungsbänder 138 eingeklebt, welche die Biegesteifigkeit der Tragarmanordnung 100 steigern.

Die zwei seitlichen geschlossenen Profilbereiche 134 oder die zwei geschlossenen Profile 134' weisen auf der Oberseite eine integrierte Schiene, vorzugsweise C-Schiene, auf für die spätere Befestigung der Sitze 200 auf. In die Schienen werden dazu entsprechende Nutensteine eingelegt. Vorzugsweise sind die Schienen Teil der Sitzträgerplatte 170.

Es kann ferner vorgesehen sein, dass zur Aussteifung der Tragarmanordnung T-Profile ausgebildet sind, welche die Biegesteifigkeit der Tragarmanordnung 100 erhöhen.

Um die Biegesteifigkeit der Tragarmanordnung 100 weiter zu erhöhen, können zwischen und an den T-Profilen als Verstärkungsbänder z.B. "rechteckige Kohlefasergurte" eingeklebt werden.

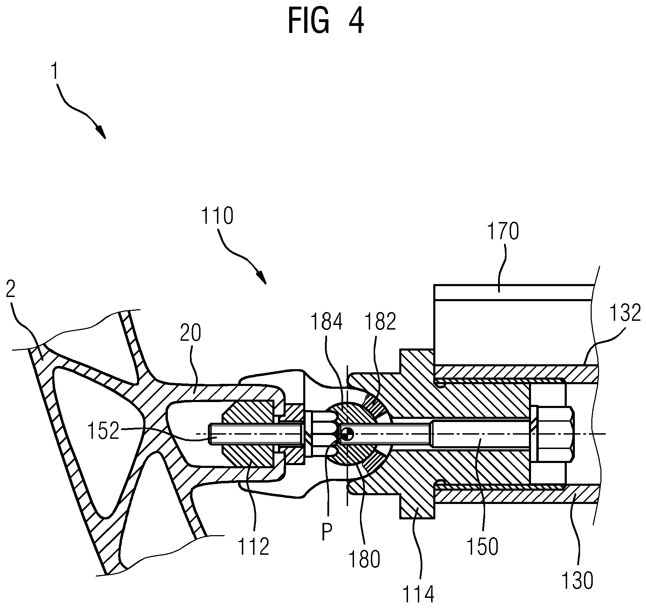

Fig. 4 zeigt eine schematische Schnittdarstellung eines Fahrzeugs des Personentransports 1 mit einer erfindungsgemäßen Sitzanordnung 10 im Bereich einer ersten Wandanbindung 110 der Sitzanordnung 10.

Die zumindest eine erste Wandhalterung 110 weist ein erstes Anbindungselement 112 zur Anbindung der ersten Wandhalterung 110 an einer Wand 2 auf und ein erstes Lagerelement 114 zur Anbindung der ersten Wandhalterung 110 an dem Tragarmelement 130 auf.

Das erste Anbindungselement 112 und das erste Lagerelement 114 sind dabei miteinander verbunden und bilden eine lösbare Verbindung aus.

Die zumindest eine erste Wandhalterung 110 weist jeweils eine Kugelkalottenverbindung 180 aufweist.

Die Kugelkalottenverbindung 180 ist dabei vorzugsweise durch eine Kugelpfanne 182 und eine Kugel 184 ausgebildet, welche ferner vorzugsweise über einen einzelnen zentrale Bolzen 150 miteinander verbunden sind.

Hierdurch wird erreicht, dass die zumindest eine erste Wandhalterung 110 jeweils eine einstellbare Verbindung 180 aufweist, welche zudem einen zentralen Drehpunkt P für die jeweilige zumindest eine erste Wandhalterung 110 bereitstellt.

Um den zentralen Drehpunkt P kann die Tragarmanordnung 100 ausgerichtet werden. Hierdurch ist eine Einstellbarkeit der Sitzanordnung 10 auch im bereits vor montierten Zustand möglich ist und somit eine Justage vor dem endgültigen Festsetzen der Kugelkalottenverbindung 180 möglich ist. Hierdurch können Toleranzen ausgeglichen.

Die zumindest eine erste Wandhalterung 110 weist jeweils einen einzelnen zentralen Bolzen 150 auf (vgl. auch Fig. 3), welcher zur Erzeugung einer Vorspannung ausgebildet ist und vorzugsweise mit der jeweiligen Kugelkalottenverbindung 180 zusammenwirkt.

Der zumindest eine einzelne zentrale Bolzen 150 verbindet dabei jeweils das erste Anbindungselement 112 mit dem ersten Lagerelement 114 der jeweiligen ersten Wandhalterung 110.

Das jeweilige erste Anbindungselement 112 kann über einen zweiten Bolzen 152 zusammengehgalten und in der Befestigungsschiene 20 verankert sein.

Durch Montage / Demontage des zumindest einen einzelnen zentralen Bolzens 150 ist die jeweilige erste Wandhalterung 160 montierbar / demontierbar.

Ferner ist durch den zumindest einen einzelnen zentralen Bolzens 150 eine Höheneinstellung der Sitzanordnung 10 zum Ausgleich von Fertigungstoleranzen des Rohbaus möglich.

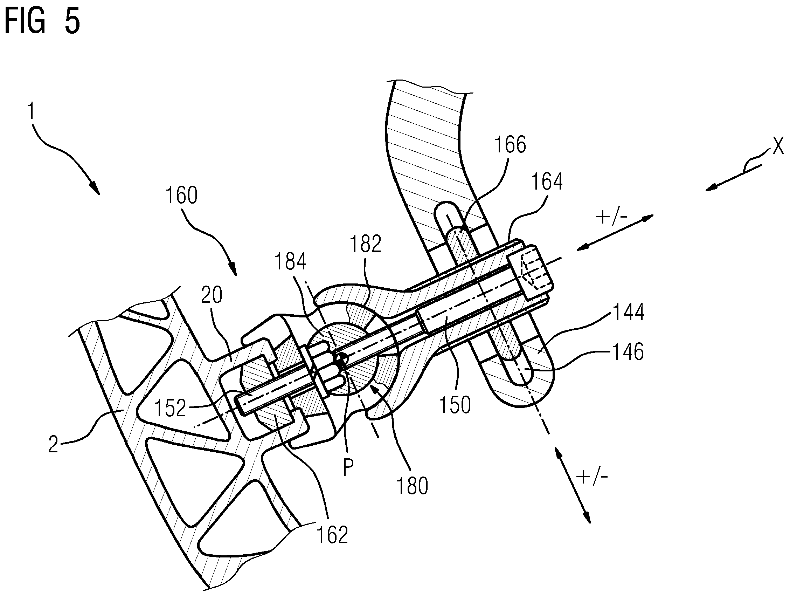

Fig. 5 zeigt eine schematische Schnittdarstellung eines Fahrzeugs des Personentransports mit einer erfindungsgemäßen Sitzanordnung im Bereich einer zweiten Wandanbindung der Sitzanordnung.

Die zumindest eine zweite Wandhalterung 160 weist ein zweites Anbindungselement 162 zur Anbindung der zweiten Wandhalterung 160 an einer Wand 2 auf und ein zweites Lagerelement 164 zur Anbindung der zweiten Wandhalterung 160 an dem Stützelement 130 auf.

Das zweite Anbindungselement 162 und das zweite Lagerelement 164 sind dabei miteinander verbunden und bilden eine lösbare Verbindung aus.

Der zumindest eine einzelne zentrale Bolzen 150 verbindet dabei jeweils das zweite Anbindungselement 162 mit dem zweiten Lagerelement 164 der jeweiligen zweiten Wandhalterung 160.

Durch Montage / Demontage des zumindest einen einzelnen zentralen Bolzens 150 ist die jeweilige zweite Wandhalterung 160 montierbar / demontierbar.

Ferner ist durch den zumindest einen einzelnen zentralen Bolzens 150 eine Höheneinstellung der Sitzanordnung 10 zum Ausgleich von Fertigungstoleranzen des Rohbaus möglich.

Die zumindest eine zweite Wandhalterung 160 weist jeweils eine Kugelkalottenverbindung 180 auf.

Die zumindest eine zweite Wandhalterung 160 jeweils einen einzelnen zentralen Bolzen 150 auf (vgl. Fig. 3), welcher zur Erzeugung einer Vorspannung ausgebildet ist und vorzugsweise mit der jeweiligen Kugelkalottenverbindung 180 zusammenwirkt.

Die Kugelkalottenverbindung 180 wird dabei vorzugsweise durch eine Kugelpfanne 182 und eine Kugel 180 ausgebildet, welche ferner vorzugsweise über einen einzelne zentrale Bolzen 150 miteinander verbunden sind.

Hierdurch wird erreicht, dass die zumindest eine zweite Wandhalterung 160 jeweils eine einstellbare Verbindung 180 aufweist, welche zudem einen zentralen Drehpunkt P für die jeweilige zumindest eine zweite Wandhalterung bereitstellt.

Hierdurch wird erreicht, dass eine Einstellbarkeit der Sitzanordnung 10 auch im bereits vor montierten Zustand möglich ist und somit eine Justage vor dem endgültigen Festsetzen der Kugelkalottenverbindung 180 möglich ist. Hierdurch können Toleranzen ausgeglichen.

Das jeweilige zweite Anbindungselement 162 kann über einen zweiten Bolzen 152 zusammengehgalten und in der Befestigungsschiene 20 verankert sein.

Die zumindest eine zweite Wandhalterung 160 weist ferner ein Zwischenelement 166 auf, das das zweite Lagerelement 164 und die Stützanbindung 144 miteinander verbindet. Vorzugsweise weist die Stützanbindung 144 ein Langloch 145 zur Führung und Befestigung des zentrale Bolzen 150 auf.

Des Weiteren weist die Stützanbindung eine Ausnehmung 146 auf, in welcher das Zwischenelement 166 verschiebbar in der Stützanbindung 144 gelagert ist.

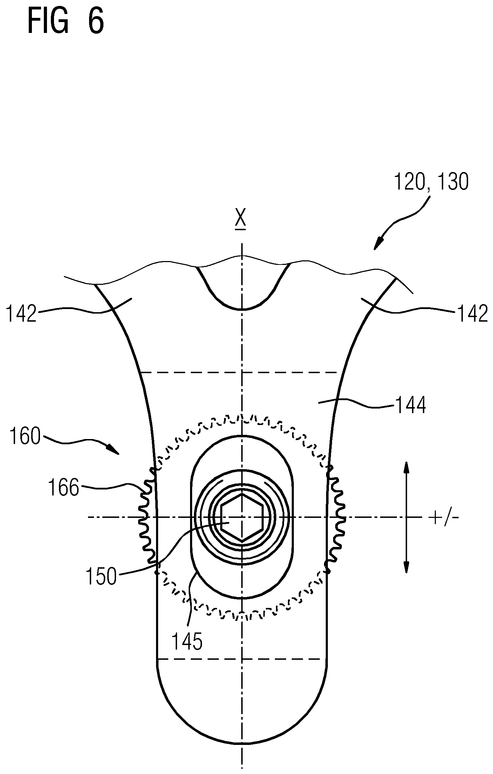

Fig. 6 zeigt eine schematische Darstellung einer erfindungsgemäßen Sitzanordnung 10 im Bereich einer zweiten Wandanbindung 160.

Wie bereits mit Verweis auf Fig. 3 beschrieben, weist das Stützelement 140 des Tragarms 120 die zumindest zwei Stützstreben 142 auf, welche sich von der, vorzugsweise einer einzelnen, Stützanbindung 144 zum Tragarmelement 130 erstrecken.

Das in Bezug auf Fig. 5 beschriebene Langloch 145 ist gemäß Fig. 6 besser erkennbar. Die zumindest eine zweite Wandhalterung 160.

Wie aus der Figur 6 ersichtlich, ist das Zwischenelement 166 in der Stützanbindung 144 verschiedentlich gelagert. Das Zwischenelement 166 ist deshalb verschieblich gelagert, damit es Bauteiltoleranzen zwischen Wand 2 und Sitzträgeranordnung 10 ausgleichen kann und die Kugelkalottenverbindung 180 und die daran befestigten Elemente spannungsfrei zur Deckung bringen kann.

Das zweite Lagerelement 164 ist vorzugsweise als Gewindeausgleichselement ausgebildet. Das zweite Lagerelement 164 als Gewindeausgleichselement weist auf der einen Seite die Kugelpfanne 182 als konkaves Element der Kugelkalottenverbindung 180 auf und an der Gegenseite ein Außengewinde, welches der axialen Höheneinstellung dient. Gelagert ist das Gewinde in dem Zwischenelement 166.

In Ausgestaltung kann das Zwischenelement 166 als Höheneinstellrad ausgebildet sein, welches in der Stützanbindung 144 quer verschieblich gelagert ist. In axialer Richtung läuft eine Bohrung durch das Gewindeausgleichselement 164, welches zur Aufnahme des zentralen Bolzens 150 dient, welche die zweite Wandhalterung 160 und insbesondere Kugelkalottenverbindung 180 miteinander verspannt.

Zur Befestigung der Sitzanordnung 10 an der Wand 2 wird zunächst das zumindest eine erste Anbindungselement 112 montiert. Vorzugsweise sind dies zumindest zwei ersten Anbindungselemente 112 die im Abstand der ersten Wandhalterungen 110 in der Befestigungsschiene vormontiert werden. Das zumindest eine zweite Anbindungselement 162 wird genau mittig zwischen den zumindest zwei ersten Anbindungselementen 112 vormontiert. Hierzu wird die Kugel der jeweiligen Kugelkopfverbindung 184 montiert.

Zwischen den ersten Anbindungselementen 112 und der Befestigungsschiene 20 sowie zwischen den zweiten Anbindungselementen 162 unter Befestigungsschiene 20 ist eine formschlüssige Verbindung vorhanden, die dafür sorgt, dass später die Befestigungsschienen 20 durch Krafteinleitung in die Anbindungselemente 112, 162 nicht plastisch verformt werden.

Vorzugsweise sind die Anbindungselemente 112,162 als Befestigungsböcke derart ausgebildet, dass diese ein zylindrisches Lagerauge aufweisen, also eine zylindrische Bohrung auf, in die ein dazu passendes zylindrische Lagerauge spielfrei eingelegt ist. Dieses hat zudem eine Gewindebohrung, welches für das spätere Verspannen der Einzelelemente dient. Das Lagerauge kann sich also um seine Achse (und damit auch die Gewindebohrung) "zwängungsfrei" drehen.

Dies ist notwendig, für eine Winkelkorrektur der Sitzanordnung 10, damit dieser waagrecht (zum Fahrzeug (Fußboden)) ausgerichtet werden kann. Damit kann dann auch die zweite (untere) Wandhalterung, welche den Kraftschluss zwischen der Stützanbindung 144 und der Wand 2 herstellt, spannungsfrei montiert werden, sodass keine Querkräfte auf den zentralen Bolzen 150 wirken.

Die vorstehende Offenbarung gilt gleichermaßen für ein Fahrzeug des Personentransports, vorzugsweise ein spurgeführtes Fahrzeug, insbesondere ein Schienenfahrzeug, umfassend zumindest eine, wie vorstehend beschrieben, ausgeführte Sitzanordnung. Gleichsam kann sich die vorstehende Offenbarung auch auf einen einzelnen Wagenkasten eines spurgeführten Fahrzeugs beziehen.

Abschließend sei erwähnt, dass die Merkmale aller oben beschriebenen Ausführungsvarianten untereinander in beliebiger Weise kombiniert werden können, um weitere andere Ausführungsbeispiele der Erfindung zu bilden. Auch können alle Merkmale von Unteransprüchen jeweils für sich mit jedem Merkmal jedes anderen der Ansprüche kombiniert werden, und zwar jeweils für sich allein oder in beliebiger Kombination, um weitere andere Ausführungsbeispiele zu erhalten.

Obwohl die Erfindung im Detail durch ein Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Sitzanordnung (10), insbesondere für ein Fahrzeug des Personentransports (1), umfassend zumindest einen Sitz (200) und eine Tragarmanordnung (100),
wobei die Tragarmanordnung (100) einen Tragarm (120) aufweist,
wobei der Tragarm (120) ein Tragarmelement (130) und ein Stützelement (140) aufweist,
**dadurch gekennzeichnet, dass**
das Stützelement (140) integral in das Tragarmelement (130) eingebunden ist und der Tragarm (120) einstückig ausgebildet ist.

2. Sitzanordnung (10) nach Anspruch 1,
**dadurch gekennzeichnet, dass**
die Tragarmanordnung (100) zumindest eine erste Wandhalterung (110) aufweist, welche an dem Tragarmelement (130) angebunden ist und zumindest eine zweite Wandhalterung (160) aufweist, welche an dem Stützelement (140) angebunden ist.

3. Sitzanordnung (10) nach Anspruch 1 oder 2,
**dadurch gekennzeichnet, dass**
das Tragarmelement (130) ein erstes Ende (132) aufweist, wobei an dem ersten Ende (132) die zumindest eine Wandhalterung (110) angebunden ist.

4. Sitzanordnung (10) nach einem der Ansprüche 1 bis 3,
**dadurch gekennzeichnet, dass**
das Tragarmelement (130) ein zweites Ende (136) aufweist, das dem ersten Ende (132) gegenüberliegt und als freies Ende ausgebildet ist.

5. Sitzanordnung (10) nach einem der Ansprüche 2 bis 4,
wobei die zumindest eine erste Wandhalterung (110) ein erstes Anbindungselement (112) zur Anbindung der ersten Wandhalterung (110) an einer Wand (2) aufweist und ein erstes Lagerelement (114) zur Anbindung der ersten Wandhalterung (110) an dem Tragarmelement (130) aufweist.

6. Sitzanordnung (10) nach einem der Ansprüche 2 bis 5,
wobei die zumindest eine zweite Wandhalterung (160) ein zweites Anbindungselement (162) zur Anbindung der zweiten Wandhalterung (160) an einer Wand (2) aufweist und ein zweites Lagerelement (164) zur Anbindung der zweiten Wandhalterung (160) an dem Stützelement (130) aufweist.

7. Sitzanordnung (10) nach einem der vorhergehenden Ansprüche,
**dadurch gekennzeichnet, dass**
die zumindest eine erste Wandhalterung (110) und/oder die zumindest eine zweite Wandhalterung (160) jeweils eine Kugelkalottenverbindung (180) aufweist.

8. Sitzanordnung (10) nach einem der vorhergehenden Ansprüche,
**dadurch gekennzeichnet, dass**
die zumindest eine erste Wandhalterung (110) und/oder die zumindest eine zweite Wandhalterung (160) jeweils einen einzelnen zentralen Bolzen (150) aufweist, welcher zur Erzeugung einer Vorspannung ausgebildet ist und vorzugsweise mit der jeweiligen Kugelkalottenverbindung (180) zusammenwirkt.

9. Sitzanordnung (10) nach einem der Ansprüche 1 bis 7,
**dadurch gekennzeichnet, dass**
die Tragarmanordnung (100) zumindest eine Sitzträgerplatte (170) aufweist, die mit Tragarm (120) verbunden ist und wobei die Sitzträgerplatte (170) den Sitz (200) trägt.

10. Sitzanordnung (10) nach einem der vorhergehenden Ansprüche,
**dadurch gekennzeichnet, dass**
der Tragarm (120) als Verbundbauteil, vorzugsweise als Faserverbundbauteil ausgebildet ist.

11. Sitzanordnung (10) nach einem der vorhergehenden Ansprüche,
**dadurch gekennzeichnet, dass**
das Stützelement (140) zumindest zwei Stützstreben (142) aufweist, welche sich von einer, vorzugsweise einer einzelnen, Stützanbindung (144) zum Tragarmelement (130) erstrecken.

12. Sitzanordnung (10) nach Anspruch nach einem der vorhergehenden Ansprüche,
**dadurch gekennzeichnet, dass**
der Tragarm (120) einen zwischen dem Tragarmelement (130) und dem Stützelement (140) definierten Freiraum (F) aufweist, welcher frei von Elementen der Sitzanordnung (10) ist.

13. Sitzanordnung (10) nach einem der vorhergehenden Ansprüche,
**dadurch gekennzeichnet, dass**
der Traganordnung (100), vorzugsweise die Sitzträgerplatte (170) und/oder das Tragarmelement (130), in einer Querrichtung (Q) betrachtet zumindest im Bereich des ersten Endes (132) durch einen mittleren offenen Profilbereich (133) oder ein mittleres offenes Profil (133') ausgebildet ist, der seitlich von zwei geschlossenen Profilbereichen (134) oder zwei geschlossenen Profilen (134') eingefasst ist.

14. Sitzanordnung (10) nach einem der vorhergehenden Ansprüche,
**dadurch gekennzeichnet, dass**
der Tragarm (120), vorzugsweise das Tragarmelement (130) und/oder die die Sitzträgerplatte (170), an seiner Unterseite durch Verstärkungsbänder (138), vorzugsweise aus einem Faserverbundwerkstoff, ferner vorzugsweise aus einem Kohlenfaserverbundwerkstoff, verstärkt ist, wobei die Verstärkungsbänder (138) vorzugsweise bereichsweise ausgebildet sind.

15. Fahrzeug des Personentransports (1), vorzugsweise spurgeführtes Fahrzeug, ferner vorzugsweise Schienenfahrzeug, umfassend einen Wagenkasten mit einer Wand (2), vorzugsweise Seitenwand, und zumindest einer Sitzanordnung (10) nach einem der Ansprüche 1 bis 14, wobei die Sitzanordnung (10) an der Wand (2) befestigt ist.

16. Fahrzeug des Personentransport (1), nach Anspruch 15
**dadurch gekennzeichnet, dass**
die Wand (2) Befestigungsschienen (20) aufweist zur Befestigung der Sitzanordnung an der Wand (2).

17. Fahrzeug des Personentransport (1), nach Anspruch 15 oder 16,
**dadurch gekennzeichnet, dass**
zwischen der Wand (2), dem Tragarmelement (130) und dem Stützelement (140) ein Bauraum (B) ausgebildet ist, der den Freiraum (F) umfasst, wobei der Bauraum (B), längs zur Wand (2) verlaufende Bauteile, insbesondere eines oder mehrere Bauteile aus der folgenden Gruppe aufnimmt: Leitungen, Kabel, Luftkanäle, Verkleidungen, Elektronikbaugruppen, Isolierungen, Aggregate, Hydraulikbaugruppen, Pneumatikbaugruppen, Baugruppen von Klimasystemen, Heizelemente.
